# EUROPÄISCHE PATENTSCHRIFT

(11) **EP 2 587 643 B1**
(45) Veröffentlichungstag und Bekanntmachung des Hinweises auf die Patenterteilung: **11.03.2020**
(21) Anmeldenummer: 12188553.7
(22) Anmeldetag: 15.10.2012
(51) Int. Cl.: H02K 11/40

(54) **Ableitungseinrichtung**
Discharge device
Dispositif de déviation

(30) Priorität: 19.10.2011 DE 202011106899 U
(43) Veröffentlichungstag der Anmeldung: 01.05.2013
(60) Teilanmeldung: 19180934.2
(73) Patentinhaber: Schunk Transit Systems GmbH, 35435 Wettenberg (DE)
(72) Erfinder: Zilch, Peter, 35428 Langgöns (DE)
(74) Vertreter: advotec.

(56) Entgegenhaltungen:
- EP-A1- 1 736 621
- DE-A1- 10 013 222
- DE-A1-102009 004 060
- US-A- 1 394 211
- US-A- 4 873 512
- US-A- 5 227 950

## Beschreibung

Die Erfindung betrifft eine Ableitungseinrichtung gemäß dem Oberbegriff des Anspruchs 1.

Derartige Ableitungseinrichtungen können zur Ableitung elektrostatischer Aufladung aufgrund von Reibungseffekten oder auch äußerer Einwirkungen, wie beispielsweise Blitzeinschlag, eingesetzt werden. Darüber hinaus können derartige Ableitungseinrichtungen auch zur Ableitung elektrischer Ladung von Motorwellen von Elektromotoren, die insbesondere an Drehstrommotoren in Folge eines welleninduzierten elektrischen Stroms entstehen können, eingesetzt werden. Im letzteren Fall dient die Ableitung des "Wellenstroms" insbesondere zur Vermeidung elektrolytischer Korrosion in den Lagern der Motoren.

Zur Ausführung von Ableitungseinrichtungen ist es bekannt, eine bürstenförmige Anordnung vorzusehen, bei der eine häufig unter Verwendung von dünnen Kupferdrähten hergestellte Erdungsbürste in Schleifkontakt mit einem Kontaktumfang der Welle angeordnet wird.

Bei der bekannten, beispielsweise in der DE 100 13 222 A1 beschriebenen Erdungsbürste mit metallischen Borsten stellt sich jedoch ein erhöhter Verschleiß im Schleifkontakt mit dem Kontaktpartner oder der Welle, aus der die Ladung abgeleitet werden soll, ein.

Aus der DE 10 2009 004 060 A1 ist eine Ableitungseinrichtung bekannt, bei der ein aus Kohlenstofffasern gebildetes Seil unter Seilvorspannung am Kontaktumfang der Welle anliegt.

Die EP 1 736 621 A1 zeigt eine Schleifringanordnung, die einen in einem Schließzylindergehäuse angeordneten Rahmenhalter zur Anordnung von im Rahmenhalter gespannt aufgenommenen Drähten aufweist.

Der vorliegenden Erfindung liegt die Aufgabe zu Grunde, eine Ableitungseinrichtung vorzuschlagen, die einem verringerten Verschleiß unterliegt.

Diese Aufgabe wird durch eine Ableitungseinrichtung mit den Merkmalen des Anspruchs 1 gelöst.

Die erfindungsgemäße Ableitungseinrichtung weist zur Ableitung elektrostatischer Ladung von einer Welle einen Kontaktstrang auf, der tangential zu einem Kontaktumfang der Welle in einem Rahmenhalter derart angeordnet ist, dass in einer Kontaktstellung des Kontaktstrangs zwischen diesem und dem Kontaktumfang der Welle eine Kontaktfläche ausgebildet ist, wobei der Kontaktstrang eine Faseranordnung aus einer Vielzahl von Kohlenstofffasern aufweist. Erfindungsgemäß weist der Kontaktstrang eine Faseranordnung aus einer Vielzahl von Kohlenstofffasern auf und der Rahmenhalter ist an einer zum Kontaktstrang parallelen Rahmenseite mit einer Längsaufnahme versehen, die mit einer in einer Gestelleinrichtung definiert angeordnete Lagerachse verbunden ist, wobei durch eine Änderung des radialen Abstands zwischen der Lagerachse und dem Kontaktumfang der Welle der vom Kontaktstrang auf den Kontaktumfang ausgeübte Kontaktdruck einstellbar ist.

Besonders vorteilhaft ist es, wenn der Rahmenhalter mit einer Vorspanneinrichtung zur Beaufschlagung des Kontaktstrangs mit einer definierten Zugspannung versehen ist.

Eine besonders belastbare Ausgestaltung wird möglich, wenn die Faseranordnung des Kontaktstrangs als Litze oder Kordel ausgebildet ist.

Nachfolgend werden bevorzugte Ausführungsformen der Erfindung anhand der Zeichnungen näher erläutert. Es zeigen:
- **Fig. 1:**: eine Ableitungseinrichtung in Kontakt zu einer Welle in isometrischer Darstellung;
- **Fig. 2:**: die in **Fig. 1** dargestellte Ableitungseinrichtung in Seitenansicht;
- **Fig. 3:**: die in **Fig. 1** dargestellte Ableitungseinrichtung in Draufsicht.

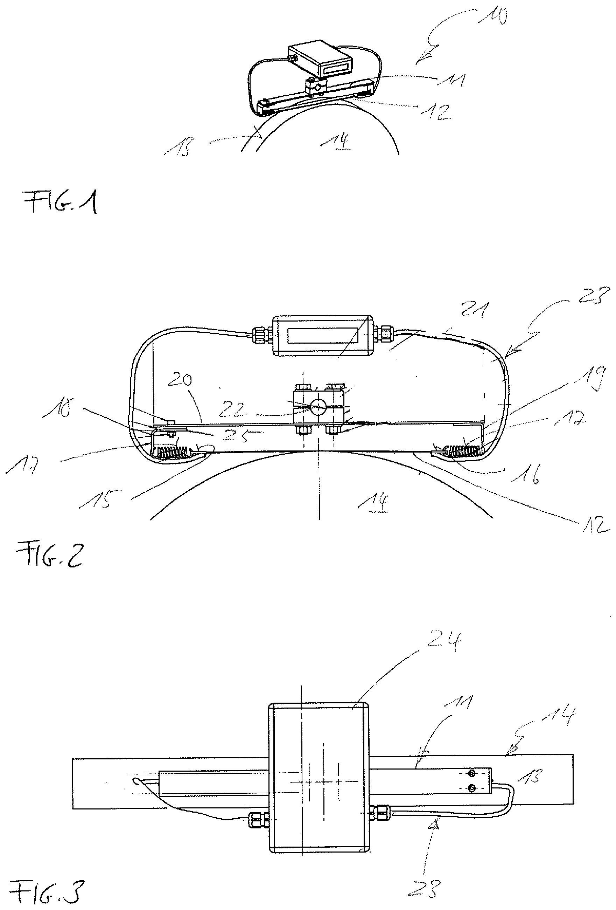

**Fig. 1** zeigt eine Ableitungseinrichtung 10 mit einem in einem Rahmenhalter 11 angeordneten Kontaktstrang 12, der aus einer Vielzahl sich in Strangrichtung erstreckender Kohlenstofffasern gebildet ist.

Wie insbesondere **Fig. 2** zeigt, liegt der Kontaktstrang 12 im Wesentlichen tangential an einem Kontaktumfang 13 einer Welle 14 an. Bei dem in **Fig. 2** dargestellten Ausführungsbeispiel besteht der Kontaktstrang 12 aus einer Vielzahl parallel zueinander verlaufender, gleichgerichteter Kohlenstofffasern, die zumindest an ihren Enden zu einem Verbund zusammengefasst mit einer Krafteinleitung 15, 16 versehen sind. Die Krafteinleitungen 15, 16 sind jeweils über eine hier als Schraubenfeder ausgebildete Vorspanneinrichtung 17 mit einem Anschlussende 18 bzw. 19 des Rahmenhalters 11 verbunden. An einer parallel zum Kontaktstrang 12 verlaufenden, als Rahmenbasis 20 ausgebildeten Rahmenseite des Rahmenhalters 11 ist dieser mit einer Lageraufnahme 21 versehen, die eine Verbindung des Rahmenhalters 11 mit einer an einer nicht näher dargestellten Gestelleinrichtung angeordneten Lagerachse 22 ermöglicht.

Bei dem in **Fig. 2** dargestellten Ausführungsbeispiel werden die Krafteinleitungen 15, 16 gleichzeitig als Anschlusskontakte für eine Kurzschlussschleife 23 genutzt, die mit einer elektrischen Widerstandsmesseinrichtung 24 versehen ist.

Wie aus **Fig. 2** zu sehen ist, ist zwischen der Rahmenbasis 20 des Rahmenhalters 11 und dem in **Fig. 2** links dargestellten Anschlussende 18 eine als Isolierscheibe 25 ausgebildete Isolierung vorgesehen, die das Anschlussende 18 elektrisch von der Rahmenbasis 20 isoliert, so dass ein aufgrund elektrostatischer Aufladung der Welle 14 vom Kontaktumfang 13 der Welle 14 über den Kontaktstrang 12 und die Rahmenbasis 20 in die Lagerachse 22 der Gestelleinrichtung abgeleiteter Wellenstrom zwangsläufig über die Widerstandsmesseinrichtung 24 geleitet wird. Damit ermöglicht die Widerstandsmesseinrichtung 24 eine unmittelbare Messung des im Kontaktstrang 12 ausgebildeten elektrischen Widerstands, so dass ein Verschleiß der den Kontaktstrang 12 ausbildenden Kohlenstofffasern oder gar ein Faserbruch von Kohlenstofffasern als entsprechender Anstieg des elektrischen Widerstands mit der Widerstandsmesseinrichtung 24 erfassbar ist.

Abweichend von der vorstehend beispielhaft erörterten Ausbildung des Kontaktstrangs 12 aus einer Vielzahl gleichgerichteter und parallel zueinander verlaufender Kohlenstofffasern, derart, dass die Anordnung aus dem Rahmenhalter 11 und dem Kontaktstrang 12 in etwa mit einem Geigenbogen vergleichbar ist, ist es auch vorteilhaft, wenn der Kontaktstrang aus einer Vielzahl von Kohlenstofffasern gebildet ist, die litzenförmig miteinander verwoben oder zu einer Kordel ausgebildet sind, so dass eine erhöhte Zugfestigkeit des Kontaktstrangs 12 in solchen Fällen möglich ist, wo gegebenenfalls mit einem besonders hohen Kontaktdruck gearbeitet werden muss.

Unabhängig von der Ausbildung des Kontaktstrangs 12 ist es durch eine Änderung des radialen Abstands zwischen der Lagerachse 22, auf der mittels der Lageraufnahme 21 der Rahmenhalter 11 angeordnet ist, und dem Kontaktumfang 13 der Welle 14 leicht möglich, den Kontaktdruck, der radial vom Kontaktstrang 12 auf den Kontaktumfang 13 der Welle 14 ausgeübt wird, zu ändern bzw. einzustellen.

## Patentansprüche

1. Ableitungseinrichtung (10) zur Ableitung elektrostatischer Ladung von einer Welle (14) mit einem Kontaktstrang (12), der tangential zu einem Kontaktumfang (13) der Welle in einem Rahmenhalter (11) derart anordenbar ist, dass in einer Kontaktstellung des Kontaktstrangs (12) zwischen diesem und dem Kontaktumfang (13) der Welle (14) eine Kontaktfläche ausbildbar ist,
**dadurch gekennzeichnet,**
**dass** der Kontaktstrang (12) eine Faseranordnung aus einer Vielzahl von Kohlenstofffasern aufweist und der Rahmenhalter (11) an einer zum Kontaktstrang (12) parallelen Rahmenseite mit einer Lageraufnahme (21) versehen ist, die mit einer in einer Gestelleinrichtung definiert angeordneten Lagerachse (22) verbunden ist, wobei durch eine Änderung des radialen Abstands zwischen der Lagerachse (22) und dem Kontaktumfang (13) der Welle (14) der vom Kontaktstrang (12) auf den Kontaktumfang (13) ausgeübte Kontaktdruck einstellbar ist.

2. Ableitungseinrichtung nach Anspruch 1,
**dadurch gekennzeichnet,**
**dass** der Rahmenhalter (11) mit einer Vorspanneinrichtung (17) zur Beaufschlagung des Kontaktstrangs (12) mit einer definierten Zugspannung versehen ist.

3. Ableitungseinrichtung nach Anspruch 1 oder 2,
**dadurch gekennzeichnet,**
**dass** die Faseranordnung des Kontaktstrangs (12) als Litze oder Kordel ausgebildet ist.

## Claims

1. A discharge device (10) for discharging electrostatic charges from a shaft (14), the discharge device (10) comprising a contact strand (12) which is disposable in a frame support (11) so as to be tangential relative to a contact circumference (13) of the shaft in such a manner that a contact surface is formed between the contact strand (12) and the contact circumference (13) of the shaft (14) when the contact strand (12) is in a contact position,
**characterized in that**
the contact strand (12) has a fiber arrangement composed of a plurality of carbon fibers, and the frame support (11) is provided with a bearing mount (21) on a frame side parallel to the contact strand (12), the bearing mount (21) being connected to a bearing axis (22) disposed in a rack in a defined manner, the contact pressure exerted on the contact circumference (13) of the shaft (14) by the contact strand (12) being settable by changing the radial distance between the bearing axis (22) and the contact circumference (13).

2. The discharge device according to claim 1,
**characterized in that**
the frame support (11) is provided with a pre-tensioning device (17) for subjecting the contact strand (12) to a defined tension.

3. The discharge device according to claim 1 or 2,
**characterized in that**
the fiber arrangement of the contact strand (12) is a braid or a cord.

## Revendications

1. Dispositif de décharge (10) de charges électrostatiques d'un arbre (14), le dispositif de décharge (10) comprenant un toron de contact (12) pouvant être disposé dans un cadre support (11) tangentiellement par rapport à une circonférence de contact (13) de l'arbre de telle manière qu'une surface de contact peut être formée entre le toron de contact (12) et la circonférence de contact (13) de l'arbre (14) quand le toron de contact (12) est dans une position de contact,
**caractérisé en ce que**
le toron de contact (12) a un ensemble de fibres composé d'une pluralité de fibres de carbone et le cadre support (11) est muni d'un logement de palier (21) sur un côté de cadre parallèle au toron de contact (12), le logement de palier (21) étant lié à un axe de palier (22) disposé de manière définie dans un dispositif de support, une pression de contact exercée sur la circonférence de contact (13) de l'arbre (14) par le toron de contact (12) pouvant être réglée en changeant la distance radiale entre l'axe de palier (22) et la circonférence de contact (13).

2. Dispositif de décharge selon la revendication 1,
**caractérisé en ce que**
le support cadre (11) est muni d'un dispositif de prétension (17) destiné à exercer une tension définie sur le toron de contact (12).

3. Dispositif de décharge selon la revendication 1 ou 2,
**caractérisé en ce que**
l'ensemble de fibres du toron de contact (12) est une tresse ou un cordon.
